# EUROPÄISCHE PATENTANMELDUNG

(11) **EP 2 169 881 A1**
(43) Veröffentlichungstag der Anmeldung: **31.03.2010**
(21) Anmeldenummer: 08075787.5
(22) Anmeldetag: 25.09.2008
(51) Int. Cl.: H04L 12/28, H04Q 3/58, H04Q 11/04, H04W 92/12

(54) **Verfahren und Anordnung zur Übertragung digitaler Mehrträgersignale**

(71) Anmelder: Deutsche Telekom AG, 53113 Bonn (DE)
(72) Erfinder: Lange, Christoph, 10318 Berlin (DE); Gladisch, Andreas, 13129 Berlin (DE); Orth, Bruno, 53639 Königswinter (DE)
(74) Vertreter: Drosch, Ulrich

(57) **Zusammenfassung**

Die Erfindung betrifft eine Lösung, mittels welcher digitale Mehrträgersignale über größere Distanzen übertragen werden beziehungsweise die Vorort im Nahbereich der Teilnehmer angeordneten Zugangseinheiten (3, 3, 3", 3''') einfacher und somit kompakter ausgebildet werden können.

Sie bezieht sich auf ein Kommunikationsnetzwerk, welches aus mindestens einem breitbandigen Kernnetz (1,1'), mehreren Zugangsnetzen (2, 2') und mehreren Teilnehmerstationen (4, 4', 4", 4'''), die zur Nachrichtenübertragung jeweils über eine in ein Zugangsnetz einbezogene Zugangseinheit (3, 3, 3", 3''') an ein Kernnetz (1, 1') angebunden sind. Die zwischen den Teilnehmerstationen (4, 4', 4", 4''') übertragenen Nachrichten mit Nutzdaten werden innerhalb eines jeweiligen Zugangsnetzes (2, 2') über mehrere, in dem für das betreffende Zugangsnetz (2, 2') verwendete Übertragungsmedium (23) verfügbare Trägerkanäle übertragen.

Erfindungsgemäß erfolgt die Modulation beziehungsweise Demodulation der Mehrträgersignale nicht in den in Reichweite der Teilnehmerstationen (4, 4', 4", 4''') angeordneten Zugangseinheiten (3, 3', 3", 3") (zum Beispiel DSLAMs oder Basisstationen), sondern in Zentralstationen (5), welche jeweils im Übergangsbereich zwischen dem Zugangsnetz (2, 2') für eine jeweilige Teilnehmerstation (4, 4', 4", 4''') und dem Kernnetz (1) oder den Kernnetzen(1, 1') angeordneten sind. Die Übertragung der die Nutzdaten enthaltenden Mehrträgersignale erfolgt zwischen den Zentralstationen (5) und den Zugangseinheiten (3, 3', 3", 3''') auf optischem Wege.

## Beschreibung

Die Erfindung betrifft ein Verfahren und eine Anordnung zur Übertragung digitaler Mehrträgersignale. Sie bezieht sich auf das allgemeine Gebiet der Telekommunikation und im Speziellen auf die Übertragung digitaler Mehrträgersignale in leitungsgebundenen Netzen und in Funknetzen.

Bei der Übertragung von Nachrichten nach dem Prinzip der Mehrträgerübertragung wird das innerhalb des für die Übertragung verwendeten Mediums einer Nachrichtenübertragungstechnik zur Verfügung stehende Übertragungsspektrum in eine Anzahl von Teilkanälen unterteilt. Die erzielbare Gesamtdatenübertragungsrate setzt sich dabei aus der Summe der Datenraten zusammen, mit denen die Übertragung in den einzelnen Teilkanälen erfolgt. Hierdurch lässt sich das Übertragungsspektrum flexibel an die Kanaleigenschaften des jeweils genutzten Übertragungsmediums anpassen, wobei diese Kanaleigenschaften sowohl bei leitungsgebundenen Übertragungskanälen als auch in Funkübertragungskanälen sehr stark frequenzabhängig sein können.

Für die Mehrträgerübertragung wird gegenwärtig als Multicarriermodulationsverfahren häufig das OFDM (Orthogonal Frequency Devision Multiplex) genutzt. Hierbei wird das Nutzsignal auf mehrere zueinander orthogonale Trägersignale aufgeteilt. Die zu übertragenden Nutzinformationen hoher Datenrate werden dabei in mehrere Teildatenströme mit einer niedrigen Datenrate aufgeteilt und diese auf die einzelnen Trägersignale verteilt, welche anschließend für die Übertragung addiert werden. Aufgrund der Orthogonalität ihrer Spektralanteile können die einzelnen Kanäle beim Empfänger voneinander unterschieden und die über sie übertragenen Nutzinformationen entsprechend demoduliert und wieder zur ursprünglichen Nutzinformation zusammengefügt werden.

In der leitungsgebundenen Übertragungstechnik werden Mehrträgersysteme beispielsweise bei der DSL-Technik eingesetzt. Hierbei werden symmetrische Kupferanschlussleitungen gleichzeitig zur Übertragung von Sprachnachrichten und für die breitbandige Datenübertragung genutzt. Im Zusammenhang mit drahtlosen Übertragungssystemen findet die OFDM-Übertragung beispielsweise in WLAN-Netzen Verwendung. Ferner ist ihr Einsatz bei künftigen, sich gegenwärtig in der Entwicklung befindenden Mobilfunkstandards, wie dem Mobilfunkstandard der nächsten Mobilfunkgeneration, dem LTE (Long Term Evolution), vorgesehen.

Sowohl in der leitungsgebundenen als auch in der drahtlosen Übertragungstechnik ist die für die Übertragung jeweils erreichbare Bitrate wegen der Dämpfung des jeweiligen Mediums stark entfernungsabhängig. Je größer die Bitrate wird, desto kleiner wird die von einem zentralen Punkt abdeckbare Fläche. In Bezug auf die bereits angesprochene DSL-Technik ist dies der Grund dafür, dass diese Technik insbesondere in ländlichen Gebieten teilweise nicht verfügbar ist. Die Anbindung der Teilnehmer erfolgt beim DSL über DSLAMs (Digital Subscriber Line Access Multiplexer), welche als Zugangseinheiten zur Gewährleistung einer entsprechenden Bitrate von den Teilnehmern vorzugsweise in einer Entfernung von maximal 1 bis 2 km zum jeweiligen Kundenanschluss angeordnet sein sollten. Dies ist jedoch auf dem dünn besiedelten Lande teilweise nicht oder nur schwierig zu realisieren.

Ähnliche Probleme sind aus dem Mobilfunk bekannt. In den zellularen Netzen wird von einer Basisstation, über welche eine Nachricht unmittelbar an das Endgerät eines sich in der Funkzelle dieser Basisstation befindenden Mobilfunkteilnehmers übertragen wird, ein Radius von wenigen Kilometern abgedeckt. Dies hat zur Folge, dass in dünn besiedelten Gebieten keine vollständige Netzabdeckung gewährleistet ist. Darüber hinaus weisen die einzelnen, als Zugangseinheiten fungierenden Basisstationen einen technisch vergleichsweise aufwendigen Aufbau auf. Insbesondere verfügt jede Basisstation über Modulations- und Demodulationseinheiten, mittels welcher ein zum Teilnehmer abgestrahltes Signal - im Falle von LTE - auf einen Mehrkanalträger aufmoduliert und von den Teilnehmern entgegengenommene Nachrichten entsprechend demoduliert werden. Eine Mobilfunkinfrastruktur mit einer möglichst nahezu vollständigen Netzabdeckung erfordert dabei eine hohe Dichte entsprechend aufwendig ausgebildeter Basisstationen. Dies ist zum einen sehr kostenintensiv und zum anderen mit dem Nachteil verbunden, dass die Vielzahl erforderlicher und, aufgrund ihres komplexen Aufbaus aus Sendemasten sowie weiteren, insbesondere für die Modulation/Demodulation notwendigen technischen Einheiten, großvolumigen Basisstationen im Landschaftsbild als störend empfunden wird.

Aufgabe der Erfindung ist es daher, die vorstehend geschilderten Nachteile des Standes der Technik zu vermeiden. Die Aufgabe besteht insbesondere darin, eine Lösung bereitzustellen, mittels welcher Nachrichten im Wege der Mehrträgerübertragung über größere Distanzen als bei den bekannten Lösungen des Standes der Technik übertragen werden beziehungsweise die Vorort im Nahbereich der Teilnehmer angeordneten Zugangseinheiten einfacher und somit kompakter ausgebildet werden können.

Die Aufgabe wird durch ein Verfahren mit den Merkmalen des Hauptanspruchs gelöst. Eine die Aufgabe lösende Anordnung wird durch den ersten vorrichtungsbezogenen Anspruch charakterisiert. Vorteilhafte Ausbeziehungsweise Weiterbildungen der Erfindung sind durch die jeweiligen Unteransprüche gegeben.

Das zur Lösung der Aufgabe vorgeschlagene Verfahren zur Übertragung digitaler Mehrträgersignale bezieht sich auf ein Kommunikationsnetzwerk, welches aus mindestens einem breitbandigen Kernnetz, mehreren Zugangsnetzen und mehreren Teilnehmerstationen besteht, wobei die Teilnehmerstationen zur Nachrichtenübertragung jeweils über eine in ein Zugangsnetz einbezogene Zugangseinheit an das Kernnetz beziehungsweise eines der Kernnetze angebunden sind. In diesem Kontext soll unter einem Zugangsnetz eine Struktur mit mindestens einer Zugangseinheit (zum Beispiel DSLAM und/oder Mobilfunk-Basisstation) und mehreren über eine solche Zugangseinheit angebundenen Teilnehmerstationen verstanden werden. Das Verfahren bezieht sich insoweit auf eine Übertragung von Mehrträgersignalen, als zwischen den Teilnehmerstationen übertragene Nachrichten mit Nutzdaten innerhalb eines jeweiligen Zugangsnetzes über mehrere, in dem für das betreffende Zugangsnetz verwendete Übertragungsmedium verfügbare Trägerkanäle übertragen werden. Auf die jeweils verfügbaren Trägerkanäle werden die Nutzdaten einer Nachricht mittels bekannter Modulationsverfahren zur Erzeugung von Mehrträgersignalen aufgeteilt. Erfindungsgemäß erfolgt jedoch die Modulation beziehungsweise Demodulation der Mehrträgersignale nicht, wie aus dem Stand der Technik bekannt, in den in Reichweite der Teilnehmerstationen angeordneten Zugangseinheiten (zum Beispiel DSLAMs oder Basisstationen). Gemäß der Erfindung erfolgen vielmehr die Modulationen der Kanalträger mit downstream zu Teilnehmerstationen übertragenen Nutzdaten und die Demodulation upstream von den Teilnehmerstationen ausgesendeter Signale in Zentralstationen, welche jeweils im Übergangsbereich zwischen dem Zugangsnetz für eine jeweilige Teilnehmerstation und dem Kernnetz oder den Kernnetzen angeordneten sind. Die Übertragung der die Nutzdaten enthaltenden Mehrträgersignale erfolgt dabei zwischen den Zentralstationen und den Zugangseinheiten für die Teilnehmerstationen auf optischem Wege. Hierzu erfolgt in den Zentralstationen eine elektrisch/optische Wandlung downstream und eine optisch/elektrische Wandlung upstream übertragener Mehrträgersignale. Damit korrespondierend erfolgt an den Zugangseinheiten eine optische/elektrische Wandlung downstream und eine elektrisch/optische Wandlung upstream übertragener Mehrträgersignale. In diesem Zusammenhang ist darauf hinzuweisen, dass im Kontext dieser Ausführungen unter downstream beziehungsweise einer Signalübertragung in der Downstream-Richtung immer eine Signalübertragung zu einer Teilnehmerstation hin und unter upstream beziehungsweise einer Signalübertragung in der Upstream-Richtung immer eine Signalübertragung von einer Teilnehmerstation weg verstanden werden soll.

Wie bereits ausgeführt, erfolgt die Modulation der Kanalträger mit den Nutzdaten beziehungsweise die Demodulation der Mehrträgersignale erfindungsgemäß in Einheiten, nämlich den Zentralstationen, welche nicht im Nahbereich der Teilnehmerstationen, sondern im Übergangsbereich zwischen dem beziehungsweise den Kernnetzen und den Zugangsnetzen angeordnet sind. Im Hinblick auf die Formulierung, wonach die entsprechenden Zentralstationen im Übergangsbereich zwischen Kernnetz(en) und Zugangsnetzen angeordnet sind, ist an dieser Stelle zu bemerken, dass zur Frage, welche Teile eines Kommunikationsnetzwerks als zum Kernnetz gehörig und welche Teile als zum Zugangsnetz gehörig anzusehen sind, unterschiedliche Auffassungen vertreten werden. Der Begriff Übergangsbereich soll insoweit zum Ausdruck bringen, dass die Zentralstationen, in welchen die Modulation beziehungsweise Demodulation erfolgt, bezogen auf die Downstreamrichtung (zu den Teilnehmern hin) entweder ausgangs beziehungsweise im Peripheriebereich eines Kemnetzes oder eingangs der Zugangsnetze oder gewissermaßen als Übergangseinheiten zwischen Zugangs- und Kernnetz, aber jedenfalls entfernt (das heißt entfernter als die Zugangseinheiten) von den Teilnehmerstationen angeordnet sind. Bezogen auf die Downstreamrichtung erfolgt somit die Modulation der Kanalträger mit den Nutzdaten in einer den Zugangseinheiten vorgelagerten Zentralstation und das hierbei entstehende Mehrträgersignal wird über eine optische Breitbandverbindung den Zugangseinheiten zugeführt, wo es dann entsprechend der Reichweite dieser Zugangseinheiten an die jeweils adressierte, im Umfeld einer jeweiligen Zugangseinheit befindliche Teilnehmerstation weitergeleitet wird. Hierdurch ist die Möglichkeit gegeben, die Zugangseinheiten als abgesetzte Einheiten zu realisieren, welche aufgrund des Fehlens aufwendiger Modulations- und Demodulationseinheiten einen einfachen Aufbau und sehr kompakte Bauformen aufweisen können. Gleichzeitig ergibt sich durch die Konzentration der Modulations- und Demodulationseinheiten in den Zentralstationen die Möglichkeit einer Kostenersparnis, wenn die Mehrträgersignale über den breitbandigen optischen Weg zwischen einer geringeren Anzahl von Zentralstationen und einer demgegenüber größeren Anzahl von Zugangseinheiten übertragen werden. Die Zentralstationen dienen hierbei gewissermaßen bezogen auf die Downstreamrichtung als Verteiler für die Mehrträgersignale.

Das Verfahren ist entsprechend einer praxisrelevanten möglichen Ausbildung so gestaltet, dass die Mehrträgersignale downstream und upstream wellenlängenmultiplex jeweils über denselben optischen Weg übertragen werden. Entsprechend einer weiteren möglichen Ausbildung werden die Mehrträgersignale zwischen einer Zentralstation und einer Einheit, welche mehrere Zugangseinheiten zu einer Gruppe zusammenfasst, ebenfalls wellenlängenmultiplex über denselben optischen Weg übertragen. Zur Ausbildung der letztgenannten, mehrere Zugangseinheiten zusammenfassenden Einheit sollen bei der Darstellung der erfindungsgemäßen Anordnung beziehungsweise bei der Erläuterung der Ausführungsbeispiele noch nähere Ausführungen gegeben werden.

Die zur Lösung der Aufgabe vorgeschlagene Anordnung zur Übertragung digitaler Mehrträgersignale ist Teil eines Kommunikationsnetzwerks, welches aus mindestens einem breitbandigen Kernnetz, mehreren Zugangsnetzen und

Teilnehmerstationen besteht. Wie bereits zum Verfahren ausgeführt, sind die Teilnehmerstationen zur Nachrichtenübertragung jeweils über eine in ein Zugangsnetz einbezogene Zugangseinheit an das jeweilige Kernnetz beziehungsweise eines der Kernnetze angebunden. Erfindungsgemäß ist jeder Zugangseinheit eine Zentralstation zugeordnet, welche bezogen auf die Downstreamrichtung der jeweiligen Zugangsrichtung vorgelagert angeordnet beziehungsweise bezogen auf die Upstreamrichtung der entsprechenden Zugangseinrichtung nachgeordnet ist. Die entsprechenden Zentralstationen weisen erfindungsgemäß jeweils mindestens eine Modulationseinheit zur Erzeugung eines Mehrträgersignals, mindestens eine Demodulationseinheit zur Extraktion in einem Mehrträgersignal enthaltener Nutzdaten sowie eine Einheit zur elektrisch/optischen Wandlung downstream zu den Teilnehmerstationen übertragener Mehrträgersignale und eine Einheit zur optisch/elektrischen Wandlung von den Teilnehmerstationen über die Zugangseinheiten empfangener Mehrträgersignale auf. Die Zentralstationen und die Zugangseinheiten sind erfindungsgemäß durch Lichtwellenleiter miteinander verbunden. Hierzu ist jeder Zugangseinheit eine Einheit zur optisch/elektrischen Wandlung über die betreffende Zugangseinheit downstream zu den Teilnehmerstationen übertragener Mehrträgersignale und eine Einheit zur elektrisch/optischen Wandlung von den Teilnehmerstationen empfangener, an eine Zentralstation weiterzuleitender Mehrträgersignale zugeordnet. Letzteres heißt, die Einheiten zur optisch/elektrischen und zur elektrisch/optischen Wandlung sind unmittelbar an einer jeweiligen Zugangseinheit oder in dieser, als deren integraler Bestandteil angeordnet. Die Zentralstationen sind, bereits zum Verfahren ausgeführt, im Gegensatz zu den Zugangseinheiten entfernt von den Teilnehmerstationen angeordnet. Sie sind im Übergangsbereich zwischen den Zugangsnetzen und mindestens einem Kernnetz angeordnet, also bezogen auf die Downstreamrichtung ausgangsseitig eines Kernnetzes oder eingangsseitig eines Zugangsnetzes angeordnet beziehungsweise bilden gewissermaßen eine Kern-und Zugangsnetz verbindende Einheit aus.

Vorzugsweise ist jeweils mehreren Zugangseinheiten eine Zentralstation zugeordnet. Zur Verbindung der Zentralstationen und der Zugangseinheiten werden vorzugsweise Glasfaserkabel eingesetzt.

Entsprechend einer bevorzugten Ausführungsform sind die Zugangseinheiten als eine gegenüber dem jeweiligen Kernnetz beziehungsweise der zugehörigen Zentralstation abgesetzte, nahe an den Teilnehmerstationen positionierte Einheit ausgebildet oder gemeinsam mit anderen Zugangseinheiten in einer derartigen abgesetzten Einheit angeordnet. Im letztgenannten Falle können dabei in einer solchen abgesetzten Einheit auch mehrere Zugangseinheiten angeordnet sein, welche Teil voneinander verschiedener, unterschiedliche Übertragungsmedien nutzender Zugangsnetze sind, dabei aber jeweils einer gemeinsamen Zentralstation zugeordnet sind. Gemäß einer praxisgerechten Ausbildungsform sind dabei in einer abgesetzten Einheit eine oder mehrere Zugangseinheiten eines Mobilfunknetzes und mindestens eine Zugangseinheit eines Netzes für die drahtgebundene Kommunikation angeordnet und zu einer Gruppe zusammengefasst. Bei einer vorteilhaften Weiterbildung der erfindungsgemäßen Anordnung ist, bezogen auf die Downstreamrichtung, ausgangs der Zentralstation und eingangs der mit dieser Zentralstation verbundenen Teilnehmerstationen oder abgesetzten Einheiten jeweils mindestens ein Wellenlängenmultiplexer/-demultiplexer angeordnet. Hierdurch ist es möglich, die innerhalb der abgesetzten Einheit auf die einzelnen Zugangseinheiten aufzuteilenden Mehrträgersignale zwischen der Zentralstation und der abgesetzten Einheit durch Nutzung unterschiedlicher Wellenlängen für die Träger und/oder die Downstream- und die Upstreamsignale über einen gemeinsamen Lichtwellenleiter zu übertragen.

Die Erfindung kann noch dadurch weitergebildet sein, dass zwischen einer oder mehreren Zentralstationen und den ihnen zugeordneten Zugangseinheiten und/oder abgesetzten Einheiten eine zusätzliche Verteilereinheit angeordnet ist, wobei jedenfalls in der betreffenden Zentralstation, bezogen auf die Downstreamrichtung ausgangsseitig, und in der Verteilereinheit jeweils mindestens ein Wellenlängenmultiplexer/-demultiplexer angeordnet ist.

Die Erfindung soll nachfolgend anhand von Ausführungsbeispielen näher erläutert werden. In den zugehörigen Zeichnungen zeigen:
- Fig. 1:: eine grundsätzliche Ausbildungsform der erfindungsgemäßen Anordnung,
- Fig. 2:: das auf eine Teilnehmerstation bezogene Prinzip der erfindungsgemäßen Anordnung mit Einzelheiten der Zentralstation,
- Fig. 3:: die erfindungsgemäße Anordnung als Teil eines Kommunikationsnetzwerks mit drahtgebundenen Zugangsnetzen,
- Fig. 4:: die erfindungsgemäße Anordnung als Teil eines Kommunikationsnetzwerks mit funkgestützten Zugangsnetzen,
- Fig. 5:: die erfindungsgemäße Anordnung als Teil eines Kommunikationsnetzwerks mit einer abgesetzten, Zugangseinheiten für drahtgebundene Zugangsnetze und funkgestützte Zugangsnetze aufnehmenden Einheit,
- Fig. 6:: eine Variante der Ausbildungsform gemäß Fig. 5,
- Fig. 7:: eine Ausbildungsform der Anordnung mit einer zusätzlichen Verteilereinheit,
- Fig. 8:: eine Variante der Ausbildungsform nach Fig. 7,
- Fig. 9:: das Prinzipschaltbild einer abgesetzten Einheit,
- Fig. 10:: die Blockschaltbilder eines Mehrträgermodulators und eines Mehrträgerdemodulators.

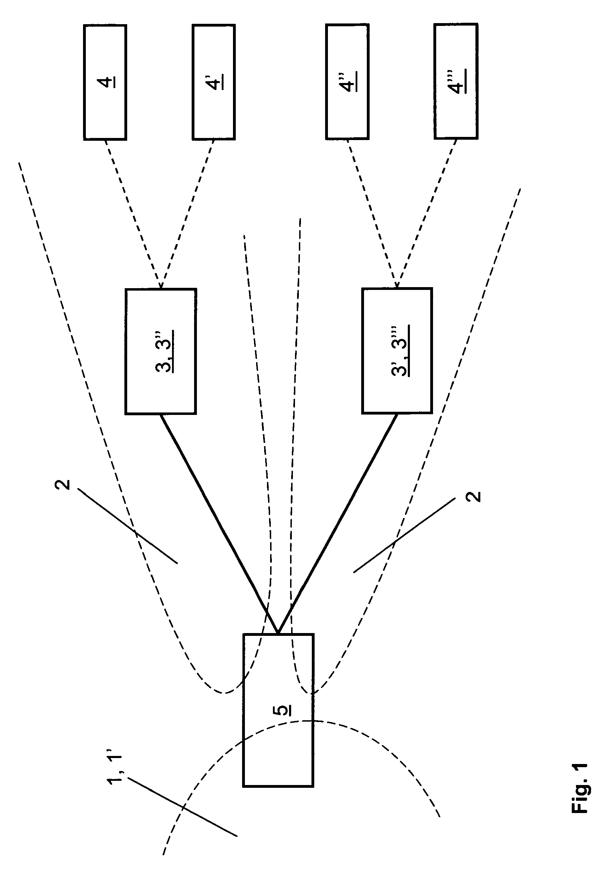

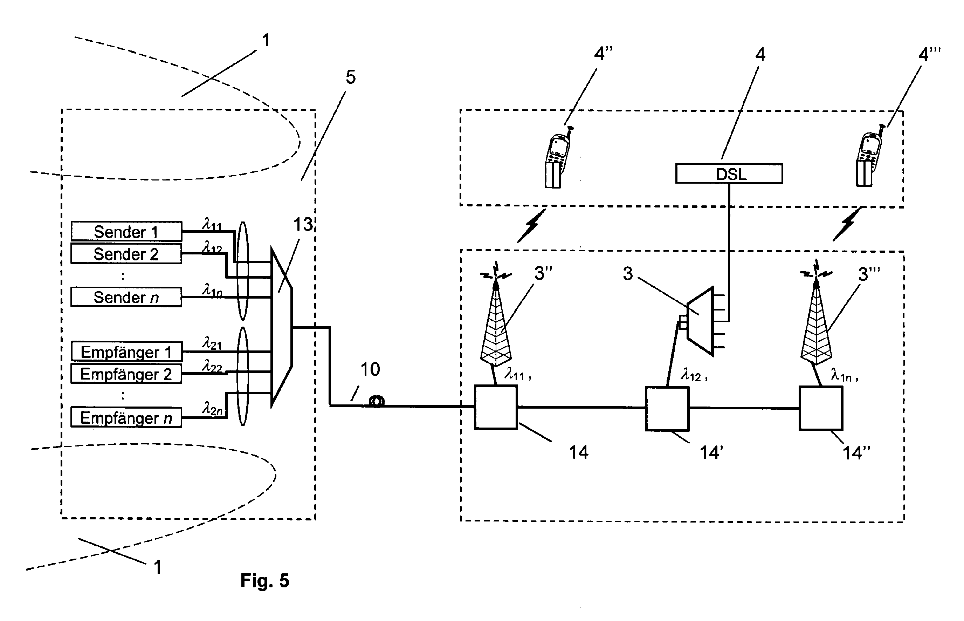

Die Fig. 1 zeigt in einer schematischen Darstellung eine grundsätzliche Ausbildungsform der erfindungsgemäßen Anordnung, welche Teil eines Kommunikationsnetzwerks ist. Das entsprechende Kommunikationsnetzwerk besteht aus mindestens einem Kernnetz 1, 1 ", mehreren Zugangsnetzen 2, 2' und mehreren Teilnehmerstationen 4, 4', 4'', 4'''. Die Teilnehmerstationen 4, 4', 4'', 4''' sind über in den jeweiligen Zugangsnetzen 2, 2' angeordnete Zugangseinrichtungen 3, 3', 3'', 3''' (beispielsweise DSLAMs des Telefonfestnetzes oder Basisstationen eines Mobilfunknetzes) an das Kernnetz 1, 1' angebunden. Die Zugangseinheiten 3, 3', 3'', 3''' sind vorliegend als abgesetzte Einheit ausgebildet beziehungsweise in derartigen abgesetzten Einheiten angeordnet. Sie sind upstreamseitig, also auf der dem Teilnehmerzugang abgewandten Seite, erfindungsgemäß mit einer von vorzugsweise mehreren Zentralstationen 5 für eine Vielzahl von Zugangseinheiten 3, 3', 3'', 3''' verbunden, von denen in der Fig. 1 beispielhaft eine dargestellt ist. Die Verbindung zur Zentralstation 5 ist durch breitbandige Glasfaserkabel 10 realisiert. Die Zentralstation 5 ist im Übergangsbereich zwischen mindestens einem Kernnetz 1, 1' und Zugangsnetzen 2, 2' für dieses Kernnetz 1, 1' angeordnet. Insbesondere im Hinblick auf eine medienübergreifende Zusammenführung unterschiedlicher Übertragungstechnologien, wie sie beispielhaft für die Zusammenführung von Netzstrukturen des Telefonfestnetzes und Mobilfunknetzen in der Fig.5 beschrieben wird, kann dabei eine Zentralstation 5 in Downstreamrichtung betrachtet auch ausgangs mehrerer unterschiedlicher Kernnetze 1, 1" (für das Festnetz und den Mobilfunk) angeordnet sein oder als Teil mehrerer Kernnetze 1, 1" beziehungsweise als Brücke zwischen diesen Kernnetzen und zugehörigen Zugangsnetzen 2, 2' aufgefasst werden.

Abweichend vom Stand der Technik erfolgt die Modulation, mit welcher zu den Teilnehmerstationen 4, 4', 4'', 4''' übertragene Nutzdaten in ein verteilt auf mehrere Trägerkanäle übertragenes Mehrträgersignal überführt werden, sowie die Demodulation, durch welche Nutzdaten upstreamseitig aus einem Mehrträgersignal extrahiert werden, nicht vor Ort bei den Teilnehmern, das heißt in einer im Nahbereich einer jeweiligen Teilnehmerstation 4, 4', 4'', 4''' angeordneten Zugangseinheit 3, 3', 3'', 3''', sondern in der erfindungsgemäß vorgesehenen Zentralstation 5. Da, wie auch in der Fig. 1 angedeutet, mehrere abgesetzte Einheiten beziehungsweise Zugangseinheiten 3, 3', 3'', 3''' mit der Zentralstation 5 kommunizieren, gelangen im Gesamtnetzwerk weniger technisch vergleichsweise aufwendige und damit teure Modulations- beziehungsweise Demodulationseinheiten zum Einsatz. Downstream übertragene digitale Nutzdaten können trotz der verhältnismäßig großen Entfernung der Zentralstation 5, das heißt des Ortes, an welchem die Umwandlung in ein Mehrträgersignal erfolgt, mit einer hohen Datenrate zu den Teilnehmerstationen 4, 4', 4'', 4''' übertragen werden. Dies ist durch die Zentralstation 5 und die Zugangseinheiten 3, 3', 3'', 3''' beziehungsweise abgesetzten Einheiten verbindende Glasfaserkabel 10 mit geringer Dämpfung und hoher Bandbreite gewährleistet. Für die abgesetzten Einheiten beziehungsweise die Zugangseinheiten 3, 3', 3'', 3''' ergibt sich dabei der Vorteil, dass diese, aufgrund dessen, dass sie über keine Modulations- beziehungsweise Demodulationseinheiten mehr verfügen müssen, einen verhältnismäßig einfachen Aufbau aufweisen. Sie können dabei insbesondere sehr kompakt gestaltet werden, so dass die entsprechenden Einheiten selbst bei einer hohen Dichte ihrer Anordnung im Nahfeld einer großen Zahl von Teilnehmerstationen 4, 4', 4'', 4''' nicht als störend im Stadt- beziehungsweise Landschaftsbild wahrgenommen werden. Ferner ergibt sich der Vorteil, dass sich die Festnetzplanung im Grunde von den konkreten Standorten der DSLAMs entkoppeln lässt. Ebenso können die Funknetzplanung und die Anordnung der Basisstationen weitgehend voneinander getrennt werden. Die Zentralisierung bietet weiterhin die Möglichkeit, beispielsweise den anfallenden Verkehr bedarfsgerecht dynamisch zu steuern und Netzressourcen dynamisch zuzuteilen sowie die Übergabe (das "Handover") in Mobilfunknetzen zwischen benachbarten Funkzellen zu vereinfachen.

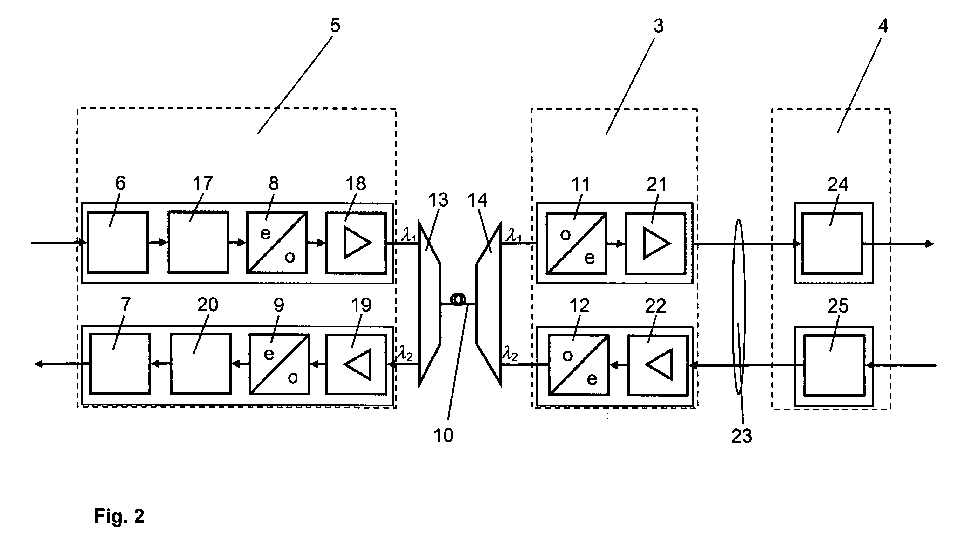

Die Fig. 2 zeigt in Form eines Blockschaltbilds die wesentlichen Elemente einer Zentralstation 5 und den sich für die abgesetzte Einheit - anhand der Darstellung nur einer Zugangseinheit 3 - ergebenden einfachen Aufbau. Danach weist die Zentralstation 5 beispielsweise für die Übertragung von Daten in der Downstreamrichtung einen Mehrträgermodulator 6, eine Einheit zur Vorverzerrung 17, einen elektrisch/optischen Wandler 8 und gegebenenfalls einen Ausgangsverstärker 18 auf. In der Upstreamrichtung weist die Zentralstation einen Eingangsverstärker 19, einen optisch/elektrischen Wandler 9, eine Einheit zur Entzerrung 20 und einen Mehrträgerdemodulator 7 auf. Durch den Mehrträgermodulator 6 werden aus dem Kernnetz 1 in Richtung der Teilnehmerstationen 4, 4' übertragene digitale Nutzdaten nach einem gebräuchlichen Modulationsverfahren, beispielsweise dem OFDM-Verfahren (Orthogonal Frequency Devision Multiplex) für die weitere Übertragung über mehrere Trägerkanäle des Übertragungsmediums 23 aufgeteilt, welches in dem für ihren Empfang bestimmten Zugangsnetz 2 für die Übertragung des dabei entstehenden Mehrträgersignals verwendet wird. Durch die Einheit 17 zur Vorverzerrung wird das erzeugte Mehrträgersignal in seiner Form an die speziellen Erfordernisse des jeweils im Zugangsnetz 2 zum Einsatz gelangenden Übertragungsmediums 23 vorbereitet. Da die Zentralstation 5 und die abgesetzte Einheit beziehungsweise Zugangseinheit 3 über ein Glasfaserkabel 10 miteinander verbunden sind, wird das Mehrträgersignal danach in der dafür in der Zentralstation angeordneten Einheit 8 elektrisch/optisch gewandelt. Entsprechendes vollzieht sich mit den an der Zentralstation 5 von Teilnehmerstationen 4, 4' über die Zugangseinheit 3 in der Upstreamrichtung eingehenden Mehrträgersignalen. Deren Pegel wird zunächst in dem vorgesehenen Eingangsverstärker 19 verstärkt, danach wird das entsprechende Signal optisch/elektrisch gewandelt, entzerrt und schließlich werden in dem Mehrträgerdemodulator 7 die Nutzdaten zur Weiterleitung in das Kernnetz 1 aus dem Mehrträgersignal extrahiert.

Gemäß dem in der Fig. 2 gezeigten Beispiel werden die Downstreamsignale und die Upstreamsignale über eine gemeinsame Glasfaser 10 übertragen. Hierzu werden die Signale gemultiplext. Folglich ist, wie aus der Figur ersichtlich, an der Zentralstation 5, bezogen auf die Downstreamrichtung ausgangsseitig ein Multiplexer/Demultiplexer 13 und an der Zugangseinheit 3 eingangsseitig ein weiterer Multiplexer/Demultiplexer 14 vorgesehen. Die als abgesetzte Einheit ausgestaltete Zugangseinheit 3 weist einen vergleichsweise einfachen Aufbau auf, wobei sie im Wesentlichen aus einem optisch/elektrischen Wandler 11 für in Downstreamrichtung zu den selbstverständlich ebenfalls jeweils eine Einheiten 24 zur Demodulation und eine Einheit 25 zur Modulation von Mehrträgersignalen aufweisenden Teilnehmerstationen 4, 4' zu übertragende Mehrträgersignale, einem Ausgangsverstärker 21 sowie für in der Upstream-richtung von den Teilnehmerstationen 4, 4' eingehende Mehrträgersignale aus einem Eingangsverstärker 22 und einem elektrisch/optischen Wandler 12 besteht.

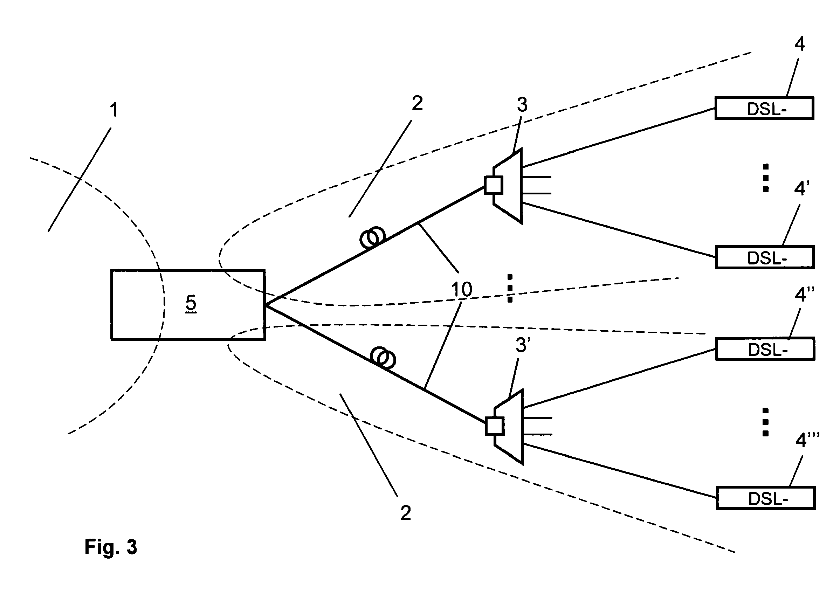

Die Fig. 3 zeigt die in der Fig. 1 in ihrer grundsätzlichen Ausbildung dargestellte Anordnung bei einem Einsatz als Teil eines Kommunikationsnetzwerkes mit drahtgebundenen Zugangsnetzen 2, 2'. Die Ausbildung entspricht der in der Fig. 1 gezeigten, wobei die zu den Zugangsnetzen gehörenden Zugangseinheiten 3, 3' der Anordnung als DSLAMs ausgebildet sind. Über diese Zugangseinheiten 3, 3' haben mit einem DSL-Modem ausgestattete Teilnehmerstationen 4, 4', 4'', 4''' Zugriff auf das Kernnetz 1. Im Hinblick darauf, dass die Erzeugung des Mehrträgersignals beziehungsweise die Extraktion von upstream übertragenen Nutzdaten aus einem Mehrträgersignal auch hier in der Zentralstation 5 erfolgt, sind die DSL-Splitter vorliegend netzseitig nicht in den als Zugangseinheiten 3, 3' fungierenden DSLAMs, sondern in der Zentralstation 5 angeordnet. Zwischen der Zentralstation 5 und den DSLAMs erfolgt auch hier die Übertragung des Mehrträgersignals über Glasfaserkabel 10. Die als abgesetzte Einheiten ausgebildeten DSLAMs nehmen lediglich eine optisch/elektrische Wandlung eines downstream übertragenen Mehrträgersignals beziehungsweise eine elektrisch/optische Wandlung eines upstream übertragenen Mehrträgersignals und gegebenenfalls noch eine Verstärkung aus- und eingehender Signale vor und können daher sehr kompakt ausgebildet werden.

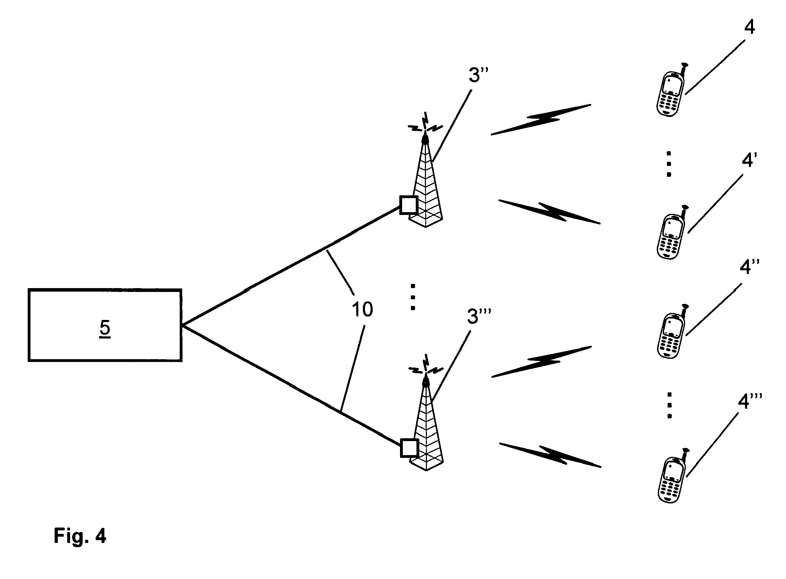

Die Fig. 4 zeigt die Anordnung gemäß Fig. 1 nochmals in einer Umsetzung für ein Mobilfunknetzwerk. Bei den abgesetzten Zugangseinheiten 3", 3'" handelt es sich hierbei um Basisstationen, das heißt insbesondere Funkantennen, wobei jedoch die Basisstationen vorliegend, dem Grundgedanken der Erfindung folgend, nicht über eine Modulations- beziehungsweise Demodulationseinheit verfügen. Diese Einheiten sind auch hier wiederum in der Zentralstation 5 angeordnet. Bei den Teilnehmerstationen 4, 4', 4'', 4''' handelt es sich, wie auch symbolisch angedeutet, um Mobilfunkgeräte beziehungsweise Handys.

Die Fig. 5 zeigt eine Ausbildungsform der erfindungsgemäßen Anordnung für den Einsatz in einem heterogenen Kommunikationsnetzwerk, bei dem Mehrträgersignale über entsprechende Netzwerkteile sowohl drahtgebunden, als auch funkgestützt übertragen werden. Hierbei sind in der abgesetzten Einheit mehrere Zugangseinheiten 3, 3'', 3''' angeordnet. Bei diesen Zugangseinheiten 3, 3'', 3''' handelt es sich einerseits um Basisstationen als Teil funkgestützter Zugangsnetze (Mobilfunk) und im Beispiel mindestens einen DSLAM für die drahtgebundene DSL-Technik. Die Zentralstation 5 nimmt hierbei sowohl Nachrichten aus beziehungsweise für ein Kernnetz 1 des Mobilfunks, als auch Nachrichten aus beziehungsweise für ein Kernnetz, 1' des Telefonfestnetzes entgegen. Sowohl das im Mobilfunk verwendete Mehrträgersignal, als auch das in der DSL-Technik verwendete Mehrträgersignal werden hierbei durch entsprechende Modulationseinheiten 6 in der Zentralstation 5 erzeugt. Entsprechend erfolgen umgekehrt in der Upstreamrichtung in dafür ausgebildeten Demodulationseinheiten 7 die Extraktion von Nutzdaten aus Mehrträgersignalen des Mobilfunknetzes sowie die Extraktion von Nutzdaten aus Mehrträgersignalen der DSL-Technik. Die entsprechenden in der Zentralstation durch Modulation erzeugten Mehrträgersignale werden nach einer elektrisch/optischen Wandlung über optische Sender von der Zentralstation 5 ausgesendet und über ein Glasfaserkabel 10 der abgesetzten Einheit zugeleitet. Sie werden hierzu, im Hinblick auf die Verwendung einer gemeinsamen Leitung für Downstream- und

Upstreamsignale ausgangs der Zentralstation 5 in einem Multiplexer gemultiplext. Entsprechend ist für upstream von den Zugangseinheiten 3, 3'', 3''' übertragene Mehrträgersignale eingangs der Zentralstation 5 ein Demultiplexer vorgesehen. Multiplexer/Demultiplexer 13 sind vorliegend in einer gemeinsamen Einheit angeordnet. Die upstream übertragenen Mehrträgersignale werden vom Demultiplexer in der Zentralstation 5 entsprechenden optischen Empfängern zugeführt, anschließend optisch/elektrisch gewandelt und schließlich (siehe hierzu Fig. 2) demoduliert und dem jeweils zugehörigen Kernnetz 1, 1' zugeleitet. Zur Richtungstrennung zwischen der Downstream- und der Upstreamrichtung sind auch den Zugangseinheiten 3, 3'', 3''' Multiplexer/Demultiplexer 14, 14', 14'' zugeordnet. Bei den Teilnehmerstationen 4, 4'', 4''' handelt es sich vorliegend um Mobilfunkgeräte beziehungsweise in Zuordnung zum DSLAM um Teilnehmerstationen für den drahtgebundenen Netzzugang mit einem DSL-Modem.

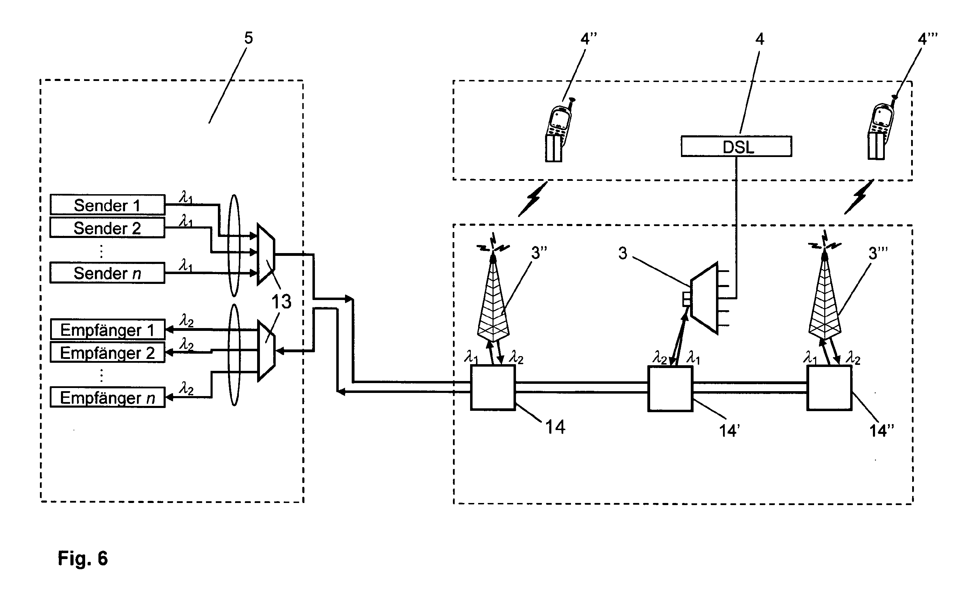

Die Fig. 6 zeigt nochmals eine abgewandelte Ausbildungsform der Anordnung nach Fig. 5. Bei dieser werden die Mehrträgersignale in der Downstreamrichtung einerseits und in der Upstreamrichtung andererseits über getrennte optische Wege, das heißt unterschiedliche Glasfaserkabel 10, geführt. Folglich ist ein Multiplexing beziehungsweise Demultiplexing lediglich im Hinblick auf die richtungsmäßige Aufteilung downstream übertragener Signale auf die Zugangseinheiten 3, 3'', 3''' beziehungsweise upstream übertragener Signale auf, dem jeweils entsprechenden Kernnetz 1, 1'' zugeordnete Empfänger und Sender der Zentralstation 5 erforderlich. Das Wellenlängenmultiplexing (Wavelength Devision Multiplexing - WDM) erfolgt daher als Add/Drop-Multiplexing (ADM).

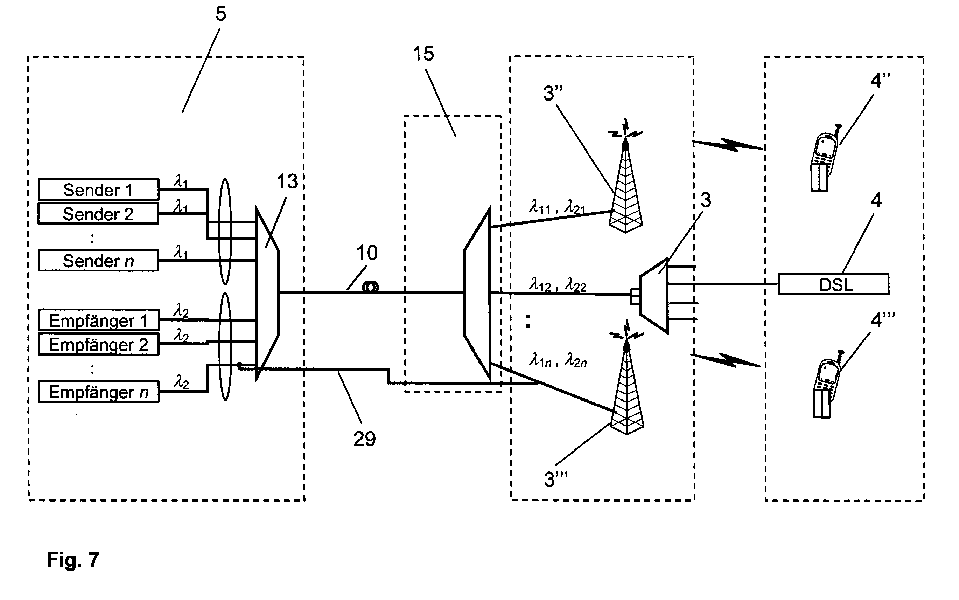

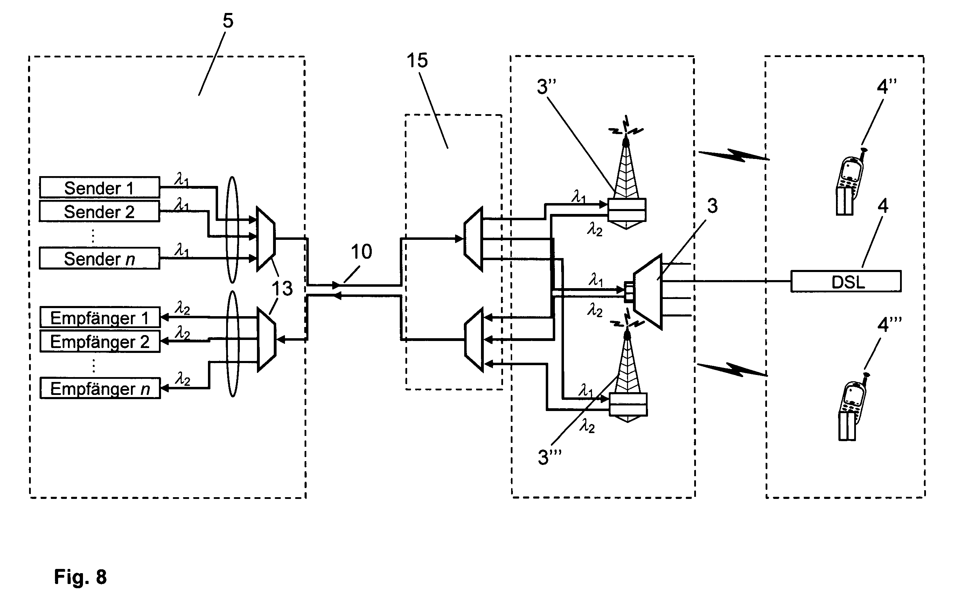

Die Figuren 7 und 8 zeigen Ausbildungen der erfindungsgemäßen Anordnung, bei welchen zwischen einer Zentralstation 5 und einer abgesetzten Einheit eine zusätzliche Verteilereinheit 15 angeordnet ist. Letztere besteht im Wesentlichen lediglich aus einem Multiplexer/Demultiplexer, durch welchen eine richtungsmäßige Aufteilung downstream übertragener Signale auf mehrere verschiedene, in der abgesetzten Einheit angeordnete Zugangseinheiten 3, 3'', 3''' erfolgt beziehungsweise die von den Zugangseinheiten 3, 3'', 3''' empfangenen Mehrträgersignale zur Übertragung mittels eines Glasfaserkabels 10 gemultiplext werden. Die Ausbildungsformen nach der Fig. 7 einerseits und nach der Fig. 8 andererseits unterscheiden sich dabei nur insoweit, als bei der Ausbildungsform nach der Fig.8 zumindest für die Downstream- und die Upstreamrichtung unterschiedliche optische Wege beziehungsweise Glasfaserkabel 10 angeordnet sind, so dass auch ein etwas anderes Multiplexing erfolgt. Bei der Anordnung gemäß der Fig. 7 ist außerdem ein zusätzlicher Schutzweg 29 zur unmittelbaren Verbindung einer Basisstation mit der Zentralstation 5 vorgesehen, wobei auch dieser Schutzweg 29 als Glasfaserkabel ausgebildet ist. Hierbei wird zur Vermeidung störungsbedingter Unterbrechungen zwischen der betreffenden Zugangseinheit 3'" (Basisstation) und der Zentralstation 5 ein durch einen optischen Koppler, ein Glasfaserkabel und einen optischen Schalter realisierter Zweitweg ausgebildet.

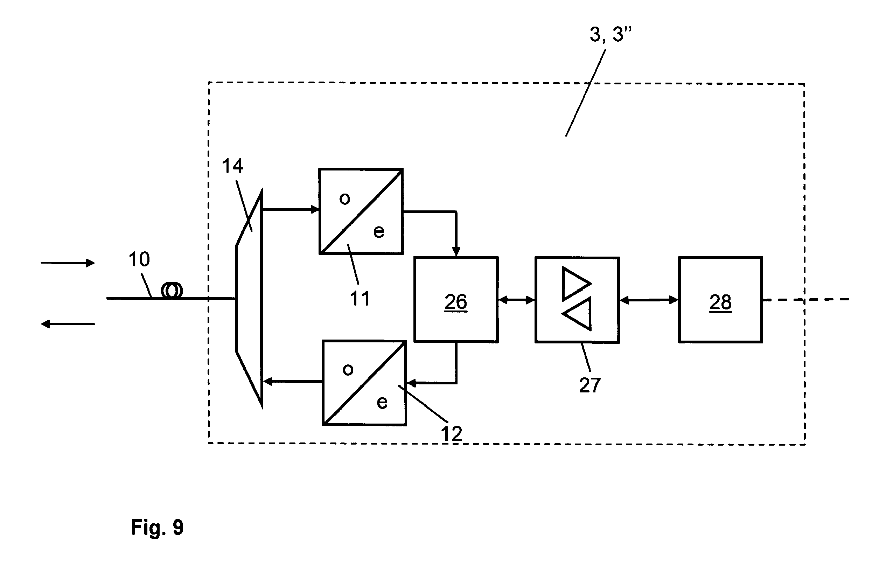

Die Fig. 9 zeigt nochmals in Form eines Blockschaltbildes das Grundprinzip des Aufbaus einer als abgesetzte Einheit ausgebildeten Zugangseinheit 3. Hierbei kann es sich sowohl um eine Zugangseinheit eines Mobilfunknetzes als auch um eine Zugangseinheit des Telefonfestnetzes handeln. Eingangs der Zugangseinheit 3 ist ein Multiplexer/Demultiplexer 14 angeordnet, welcher die Übertragung downstream und upstream zu übertragender Mehrträgersignale über ein gemeinsames Glasfaserkabel ermöglicht. In der Downstreamrichtung an der abgesetzten Einheit eingehende Mehrträgersignale werden nach dem Demultiplexing in einer entsprechenden Einheit 11 optisch/elektrisch gewandelt und die elektrischen Signale anschließend einem Duplexer beziehungsweise Zirkulator 26 zur Aufteilung beziehungsweise Zusammenfassung der Downstream- und Upstreamwege zugeführt. In einem bidirektional arbeitenden Verstärker 27 wird ein jeweiliges Mehrträgersignal verstärkt und dann anschließend einer Einheit 28 zur Medienanpassung zugeführt, über welche die Aussendung in eine jeweilige Teilnehmerstation erfolgt. Durch die Einheit 28 zur Medienanpassung wird das Mehrträgersignal entweder, im Falle dessen, dass es sich um ein Mobilfunksignal handelt, über eine Antenne abgestrahlt, oder im Falle dessen, dass es sich um ein Signal des Telefonfestnetzes handelt, über einen Leitungstreiber einer drahtgebunden an die Zugangseinheit angebundenen Teilnehmerstation zugeführt.

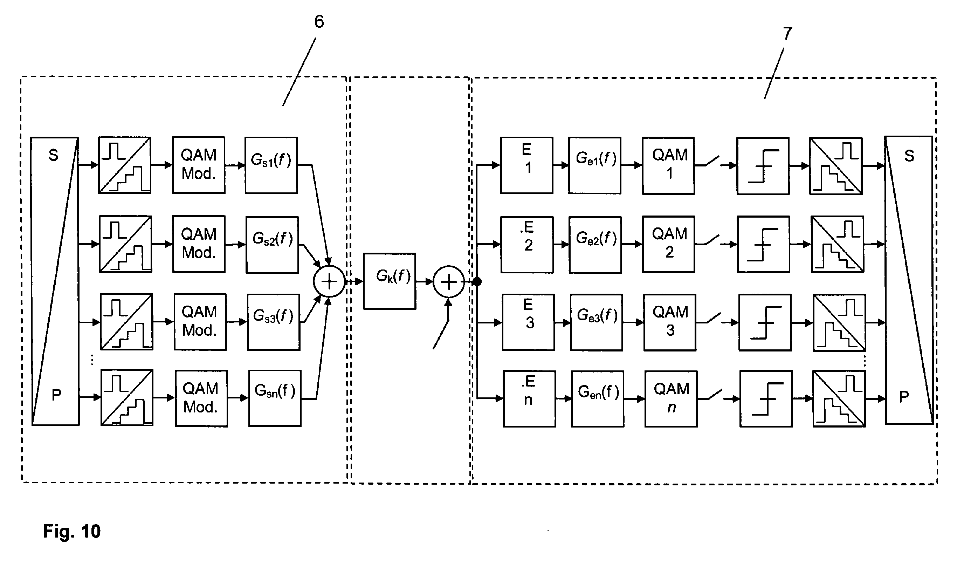

Die Fig. 10 zeigt das Blockschaltbild eines Mehrträgermodulators 6 und eines Mehrträgerdemodulators 7, wie sie gemäß der Erfindung in einer Zentralstation angeordnet sind. Der Modulator besteht im Wesentlichen aus Einheiten zur Umsetzung eines Signals auf mehrere Kanäle im Rahmen einer mehrstufigen Codierung, Einheiten zur Quadraturamplitudenmodulation und Sendefiltereinheiten. Der Mehrträgermodulator weist Einheiten zur Extraktion eines über mehrere Kanäle übertragenen Nutzsignals im Rahmen einer mehrstufigen Demodulation auf, nämlich Detektoren, Einheiten zur Quadraturamplitudendemodulation, Empfangsfilter und Entzerrer.

## Patentansprüche

1. Verfahren zur Übertragung digitaler Mehrträgersignale in einem aus mindestens einem breitbandigen Kernnetz (1, 1'), mehreren Zugangsnetzen (2, 2') und mehreren Teilnehmerstationen (4, 4', 4'', 4''') bestehenden Kommunikationsnetzwerk, in welchem die Teilnehmerstationen (4, 4', 4'', 4''') zur Nachrichtenübertragung jeweils über eine in ein Zugangsnetz (2, 2') einbezogene Zugangseinheit (, 3, 3', 3'', 3''') an das Kernnetz (1, 1') beziehungsweise eines der Kernnetze (1, 1') angebunden sind, wobei zwischen den Teilnehmerstationen (4, 4', 4'', 4''') übertragene Nachrichten mit Nutzdaten innerhalb eines jeweiligen Zugangsnetzes (2, 2') über mehrere, in dem für das betreffende Zugangsnetz (2, 2') verwendete Übertragungsmedium verfügbare Trägerkanäle übertragen werden, auf welche die Nutzdaten einer Nachricht jeweils mittels eines geeigneten Modulationsverfahrens aufgeteilt werden, **dadurch gekennzeichnet, dass** die Modulation der Kanalträger mit downstream zu Teilnehmerstationen (4, 4', 4'', 4''') übertragenen Nutzdaten und die Demodulation upstream von den Teilnehmerstationen (4, 4', 4'', 4''') ausgesendeter Signale in jeweils im Übergangsbereich zwischen dem Zugangsnetz (2, 2') für eine jeweilige Teilnehmerstation (4, 4', 4'', 4''') und dem Kernnetz (1, 1') oder den Kernnetzen (1, 1') angeordneten Zentralstationen (5) erfolgt und dass die die Nutzdaten enthaltenden Mehrträgersignale zwischen den Zentralstationen (5) und den Zugangseinheiten (3, 3', 3'', 3''') für die Teilnehmerstationen (4, 4', 4'', 4''') auf optischem Wege übertragen werden, wobei in den Zentralstationen (5) eine elektrisch/optische Wandlung downstream und eine optisch/elektrische Wandlung upstream übertragener Mehrträgersignale sowie an den Zugangseinheiten (3, 3', 3'', 3''') eine optisch/elektrische Wandlung downstream und eine elektrisch/optische Wandlung upstream übertragener Mehrträgersignale erfolgt.

2. Verfahren nach Anspruch 1, **dadurch gekennzeichnet, dass** die Mehrträgersignale downstream und upstream wellenlängenmultiplex jeweils über denselben optischen Weg übertragen werden.

3. Verfahren nach Anspruch 1 oder 2, **dadurch gekennzeichnet, dass** Mehrträgersignale zwischen einer Zentralstation (5) und einer Einheit, welche mehrere Zugangseinheiten (3, 3', 3'', 3''') zu einer Gruppe zusammenfasst, wellenlängenmultiplex über denselben optischen Weg übertragen werden.

4. Anordnung zur Übertragung digitaler Mehrträgersignale in einem Kommunikationsnetzwerk, welches aus mindestens einem breitbandige Kernnetz (1, 1'), mehreren Zugangsnetzen (2, 2') und mehreren Teilnehmerstationen (4, 4', 4'', 4''') besteht, wobei die Teilnehmerstationen (4, 4', 4'', 4''') zur Nachrichtenübertragung jeweils über eine in ein Zugangsnetz (2, 2') einbezogene Zugangseinheit (, 3, 3', 3'', 3''') an das Kernnetz (1, 1') beziehungsweise eines der Kernnetze (1, 1') angebunden sind und zwischen den Teilnehmerstationen (4, 4', 4'', 4''') übertragene Nachrichten mit Nutzdaten zwischen den Zugangseinheiten (3, 3', 3'', 3''') und den Teilnehmerstationen (4, 4', 4'', 4''') jeweils auf mehrere Trägerkanäle aufgeteilt übertragen werden, **dadurch gekennzeichnet, dass** zwischen jeder Zugangseinheit (3, 3', 3'', 3''') und dem jeweils zugehörigen Kernnetz (1, 1') jeweils eine Zentralstation (5) angeordnet ist, welche mindestens eine Modulationseinheit (6) zur Erzeugung eines Mehrträgersignals, eine Demodulationseinheit (7) zur Extraktion in einem Mehrträgersignal enthaltener Nutzdaten sowie eine Einheit (8) zur elektrisch/optischen Wandlung downstream zu den Teilnehmerstationen übertragener Mehrträgersignale und eine Einheit zur optisch/elektrischen (9) Wandlung von den Teilnehmerstationen (4, 4', 4'', 4''') empfangener Mehrträgersignale aufweist und dass die Zentralstationen (5) und die Zugangseinheiten (3, 3', 3'', 3''') durch Lichtwellenleiter (10) miteinander verbunden sind, wobei jeder Zugangseinheit (3, 3', 3'', 3''') eine Einheit (11) zur optisch/elektrischen Wandlung über die Zugangseinheit (3, 3', 3'', 3''') downstream zu den Teilnehmerstationen (4, 4', 4'', 4''') übertragener Mehrträgersignale und eine Einheit (12) zur elektrisch/optischen Wandlung von den Teilnehmerstationen (4, 4', 4'', 4''') empfangener, an eine Zentralstation (5) weiterzuleitender Mehrträgersignale zugeordnet ist.

5. Anordnung nach Anspruch 4, **dadurch gekennzeichnet, dass** jeweils mehreren Zugangseinheiten (3, 3', 3'', 3''') eine Zentralstation (5) zugeordnet ist.

6. Anordnung nach Anspruch 4 oder 5, **dadurch gekennzeichnet, dass** es sich bei den die Zentralstationen (5) und die Zugangseinheiten (3, 3', 3'', 3''') verbindenden Lichtwellenleitern (10) um Glasfaserkabel handelt.

7. Anordnung nach einem der Ansprüche 4 bis 6, **dadurch gekennzeichnet, dass** eine jeweilige Zugangseinheit (3, 3', 3'', 3''') als eine gegenüber dem Kernnetz (1, 1') und der Zentralstation (5) abgesetzte, nahe an den Teilnehmerstationen (4, 4', 4'', 4''') positionierte Einheit ausgebildet oder gemeinsam mit anderen Zugangseinheiten (3, 3', 3'', 3''') in einer derartigen abgesetzten Einheit angeordnet ist.

8. Anordnung nach Anspruch 7, **dadurch gekennzeichnet, dass** in einer oder in mehreren der abgesetzten Einheiten Zugangseinheiten (3, 3', 3'', 3''') angeordnet sind, welche Teil voneinander verschiedener, unterschiedliche Übertragungsmedien nutzender Zugangsnetze (2, 2') sind, aber jeweils einer Zentralstation (5) zugeordnet sind.

9. Anordnung nach Anspruch 8, **dadurch gekennzeichnet, dass** das in einer abgesetzten Einheit mindestens eine Zugangseinheit (3'', 3''') eines Mobilfunknetzes und mindestens eine Zugangseinheit (3, 3') eines Netzes für die drahtgebundene Kommunikation angeordnet sind.

10. Anordnung nach einem der Ansprüche 4 bis 8, **dadurch gekennzeichnet, dass** bezogen auf die Downstream-Richtung ausgangs mindestens einer der Zentralstationen (5) und eingangs der mit dieser Zentralstation (5) verbundenen Zugangseinheiten (3, 3', 3'', 3''') oder abgesetzten Einheiten jeweils mindestens ein Wellenlängenmultiplexer/-demultiplexer (13, 14, 14', 14'') angeordnet ist.

11. Anordnung nach einem der Ansprüche 4 bis 10, **dadurch gekennzeichnet, dass** zwischen mindestens einer Zentralstation (5) und mehren ihr zugeordneten Zugangseinheiten (3, 3', 3'', 3''') und/oder abgesetzten Einheiten eine Verteilereinheit (15) angeordnet ist, wobei jedenfalls in der betreffenden Zentralstation (5), bezogen auf die Downstream-Richtung ausgangsseitig, und in der Verteilereinheit (13) jeweils mindestens ein Wellenlängenmultiplexer/-demultiplexer (13, 16, 16') angeordnet ist.
